# EUROPEAN PATENT SPECIFICATION

(11) **EP 4 356 013 B1**
(45) Date of publication and mention of the grant of the patent: **21.10.2026**
(21) Application number: 21945389.1
(22) Date of filing: 14.06.2021
(51) Int. Cl.: F16B 13/04

(54) **WALL ANCHOR WITH DEFORMABLE EXPANDABLE PART**
WANDANKER MIT VERFORMBAREM SPREIZTEIL
ANCRAGE MURAL À PARTIE EXTENSIBLE DÉFORMABLE

(43) Date of publication of application: 24.04.2024
(73) Proprietor: Cobra Fixations Cie Ltée - Cobra Anchors Co. Ltd., Montréal, Québec H1J 1J8 (CA)
(72) Inventor: MCDUFF, Pierre, Québec H2V 2M4 (CA)
(74) Representative: KIPA AB
(86) International application number: PCT/CA2021/000050
(87) International publication number: WO 2022/261740

(56) References cited:
- EP-B1- 3 894 642
- WO-A1-2020/118407
- CA-A1- 2 414 436
- CA-A1- 2 540 628
- US-A- 5 234 299
- US-A- 5 690 454
- US-A1- 2003 002 951
- US-A1- 2006 120 821

## Description

### CROSS REFERENCE TO RELATED APPLICATIONS

N/A.

### FIELD

The present subject matter relates to wall anchors and, more particularly, to self-drilling anchors for use typically in hollow walls made of friable materials, e.g. plasterboard, gypsum, etc.

### BACKGROUND

The Ernst et al, Gianuzzi and McSherry U.S. Patents Nos. 4,601,625, 5,234,299 and 5,529,449, respectively, each disclose an anchor which is turned in a wall made of friable material and is retained in the wall by virtue of the friable material being compressed between the root and deep thread spiraled along the cylindrical body of the anchor and between the proximal end of the thread and flanged end of the anchor which becomes embedded in the front surface of the wall. A work piece is then fastened to the wall by a screw fastener that is screwed into the visible open end of the anchor and holds the workpiece between the flanged end of the anchor and the head of the screw fastener.

Toggle bolts are also known, such as in U.S. Patent No. 6,435,789 issued on August 20, 2002 to Gaudron. Generally, a self-drilling toggle anchor includes a drilling member and a toggle member. The drilling member is adapted to drill through the wall hole with the toggle member in its retracted position, i.e. extending axially along the drilling member, whereby the whole anchor is inserted longitudinally in the wall with the toggle member being located completely behind the wall. The toggle member defines a threaded opening that extends transversally therethrough and that has, in the retracted position of the toggle member, its axis perpendicular to the drilling member and to the longitudinal orientation of the whole anchor when it drilled into the wall. In a second step, a screw is rotatably inserted in the anchor and, at one point, a tip of the screw engages the toggle member and causes it to pivot an extended position thereof, wherein the toggle member extends at right angles to the drilling member and to the general orientation of the anchor. The screw then engages the threaded opening of the toggle member. Once the head of the screw abuts the front of the wall or the head of the anchor, it cannot displace longitudinally, such that further rotation of the screw draws the toggle member translationally towards the head of the screw and thus towards the rear face of the wall until is abuts firmly the same, whereby the anchor is fixed to the wall. Alternatively, the drilling tip can be provided on the toggle member, and in such cases, the above drilling member remains similar in that it fixedly depends from the anchor head but it does not perform the drilling action. Such designs are somewhat costly, as the anchor requires two distinct components (e.g. the above drilling and toggle members) that also must be assembled together.

There is also U.S. Patent No. 5,833,415 issued on November 10, 1998 to McSherry, which discloses a self-centering wall anchor (10, 100) having an outwardly threaded hollow cylindrical body (101, 111) with a flanged proximal end and a cutting distal end. The hollow cylindrical body diminishes in diameter toward the distal cutting end (20, 110) in the form of a pointed dome with a pointed centering tip (22, 103) at the center axis of the anchor. An inner bore (14, 105) extends continuously from its opening at the proximal end of the anchor along the center axis of the cylindrical body to the centering tip at the distal end where it is partially closed because of the disposition of the centering tip at the center axis. The distal end of the bore is in the form of a deep flute (21, 105a) which communicates and is part of the inner bore and is defined at its outer edges by a leading cutting edge (23, 107) and a trailing edge (24, 108) of the single cutter, with the leading cutting edge extending from the pointed tip in a curved distention. In one instance, the outer thread extends to the centering tip and is interrupted in the area of the bore opening to assure optimum access to material cut from the wall as the anchor is rotated.

Furthermore, U.S. Patent No. 7,654,781, which issued on February 2, 20101 to McDuff et al., which discloses an anchor (910) for mounting to a hollow wall (W) made of friable material comprises a proximal flanged end (918) adapted to be engaged by a rotatable tool (B) to rotate the anchor (910) about a longitudinal axis (A) thereof and to cause it to gradually engage the wall (W). The anchor (910) also includes a distal end (912) adapted to cut through the wall (W) as the anchor (910) is rotated, and a shank (920) extending between the proximal and distal ends (918, 912). The shank (920) includes at least one expandable leg (924) that is in a collapsed position thereof when the anchor (910) is rotated to mount it to the wall (W) and that is located distally beyond a non visible surface of the wall (W) once the anchor (910) has been mounted to the wall and is in a first position thereof. The wall anchor (910) includes an outer thread (922) that securely engages the wall (W). A threaded fastener (B), e.g. a screw, is adapted to be introduced in the anchor (910) and to threadably engage the same distally of the leg (924) such that sufficient rotation of the threaded fastener (B) retracts the distal end (912) towards the proximal end (918) thereby causing the leg (924) to displace to a laterally expanded position thereof and to engage the non visible surface of the wall (W).

A wall anchor is known from WO 2020/118407 A1.

It would therefore be desirable to provide a self-drilling anchor assembly typically for use with a fastener in hollow walls.

### SUMMARY

It would thus be desirable to provide a novel anchor assembly typically for use with a fastener in hollow walls.

The embodiments described herein provide in one aspect a wall anchor for mounting to a hollow wall, comprising a main body and an anchor member, the main body including a proximal end adapted to be engaged by a rotatable tool to rotate said anchor about a longitudinal axis thereof and to cause it to gradually engage a wall, a distal end adapted to cut through the wall as said anchor is rotated, and a shank between said proximal and distal ends, said distal end defining on an outer surface thereof an elongated blade-like shoulder extending substantially longitudinally along the main body and adapted to cut the wall material when the anchor is rotated.

Also, the embodiments described herein provide in another aspect a wall anchor for mounting to a hollow wall, comprising a main body and an anchor member, the main body including a proximal end adapted to be engaged by a rotatable tool to rotate said anchor about a longitudinal axis thereof and to cause it to gradually engage a wall, a distal end adapted to cut through the wall as said anchor is rotated, a shank between said proximal and distal ends, said shank defining at least one slot, and outer threads along the main body, the anchor member including at least one expandable leg and a body defining a hole, the expandable leg being provided with threads adapted to be substantially continuous with the outer threads of the main body, the expandable leg being in registry with the slot and being displaceable between inwardly collapsed and outwardly expanded positions, said expandable leg being in the collapsed position thereof when said anchor is rotated to mount it to the wall and being located distally past a rear surface of the wall once said anchor is mounted to the wall, said anchor being adapted to receive therein a threaded fastener and to threadably engage the body of the anchor member distally of said leg such that sufficient rotation of the threaded fastener retracts said body of the anchor member towards said proximal end thereby causing said expandable leg to extend outwardly through the slot to the expanded position of the expandable leg.

Furthermore, the embodiments described herein provide in another aspect a wall anchor for mounting to a hollow wall, comprising a main body and an anchor member, the main body including a proximal end adapted to be engaged by a rotatable tool to rotate said anchor about a longitudinal axis thereof and to cause it to gradually engage a wall, a distal end defining an opening and adapted to cut through the wall as said anchor is rotated, and a shank between said proximal and distal ends, said shank defining at least one slot, the anchor member including at least one expandable leg and a body defining a hole, the expandable leg being in registry with the slot and being displaceable between inwardly collapsed and outwardly expanded positions, the body of the anchor member extending distally within the main body into the distal end, said expandable leg being in the collapsed position thereof when said anchor is rotated to mount it to the wall and being located distally past a rear surface of the wall once said anchor is mounted to the wall, said anchor being adapted to receive therein a threaded fastener and to threadably engage the body of the anchor member distally of said leg such that sufficient rotation of the threaded fastener retracts said body of the anchor member towards said proximal end thereby causing said expandable leg to extend outwardly through the slot to the expanded position of the expandable leg.

The invention is set out in the appended set of claims.

### BRIEF DESCRIPTION OF THE DRAWINGS

For a better understanding of the embodiments described herein and to show more clearly how they may be carried into effect, reference will now be made, by way of example only, to the accompanying drawings, which show at least one exemplary embodiment, and in which:
Fig. 1 is a perspective view of a prior-art wall anchor which is shown in an expanded and installed position thereof in a wall and seen from a hidden side of the wall;
Figs. 2A and 2B are perspective views of the wall anchor of Fig. 1, but shown in an initial position thereof, prior to installation in the wall;
Figs. 2C and 2D are side elevation views of the wall anchor of Fig. 1, but shown in an initial position thereof, prior to installation in the wall;
Fig. 3A is a perspective view of a rigid main body of the wall anchor of Fig. 2, in accordance with an exemplary embodiment;
Fig. 3B is a perspective view of a deformable anchor member of the wall anchor of Fig. 2, in accordance with an exemplary embodiment ;
Fig. 4 is a further perspective view of the wall anchor of Fig. 1, which is shown in the expanded and installed position thereof in the wall and seen from a hidden side of the wall;
Fig. 5 is a top plan view of the wall anchor of Figs. 1 and 4, which is shown in the expanded and installed position thereof in the wall and seen from a hidden side of the wall;
Figs. 6 and 7 are perspective views of a prior-art wall anchor, which is shown an initial position thereof, prior to installation in the wall;
Fig. 8 is a side elevation view of the wall anchor of Figs. 6 and 7;
Figs. 9 and 10 are perspective views of a main body of the wall anchor of Figs. 6 to 8, in accordance with an exemplary embodiment;
Fig. 11 is a side elevation view of the main body of Figs. 9 and 10;
Figs. 12 and 13 are perspective views of a deformable anchor member of the wall anchor of Figs. 6 to 8, in accordance with an exemplary embodiment;
Fig. 14 is a side elevation view of the anchor member of Figs. 12 and 13;
Figs. 15A to 15C are sequential front perspective views of the wall anchor of Figs. 6 to 8, which is shown with a fastener inserted therein, the successive views showing three positions of the deformable anchor member up to an expanded position of wall anchor, in accordance with an exemplary embodiment, these views being exempt for illustration purposes of a wall into which the wall anchor would be installed;
Figs. 16A to 16C are sequential rear perspective views of the wall anchor of Figs. 6 to 8, which views are similar to Figs. 15A to 15C but taken from a different angle;
Figs. 17A to 17D are successive partly cross-sectional schematic side views showing the installation of the wall anchor of Figs. 6 to 8 into the wall, in accordance with an exemplary embodiment, with Fig. 17D showing the wall anchor in an expanded and installed position thereof in the wall;
Fig. 18 is a perspective view of a wall anchor in accordance with an exemplary embodiment, which is shown an initial position thereof, prior to installation in the wall;
Figs. 19 and 20 are perspective views of a main body of the wall anchor of Fig. 18, in accordance with an exemplary embodiment;
Fig. 21 is a side elevation view of the main body of Figs. 19 and 20;
Figs. 22 and 23 are perspective views of the wall anchor of Fig. 18;
Fig. 24 is a side elevation view of the wall anchor of Fig. 18;
Figs. 25 and 26 are perspective views of a deformable anchor member of the wall anchor of Fig. 18, in accordance with an exemplary embodiment;
Fig. 27 is a side elevation view of the deformable anchor member of Figs. 25 and 26;
Figs. 28 to 30 are sequential front perspective views of the wall anchor of Fig. 18, which is shown with a fastener inserted therein, the successive views showing three positions of the deformable anchor member up to an expanded position of wall anchor, in accordance with an exemplary embodiment, these views being exempt for illustration purposes of a wall into which the wall anchor would be installed; and
Figs. 31A to 31D are successive partly cross-sectional schematic side views showing the installation of the wall anchor of Fig. 18 into the wall, in accordance with an exemplary embodiment, with Fig. 31D showing the wall anchor in an expanded and installed position thereof in the wall.

### DESCRIPTION OF VARIOUS EMBODIMENTS

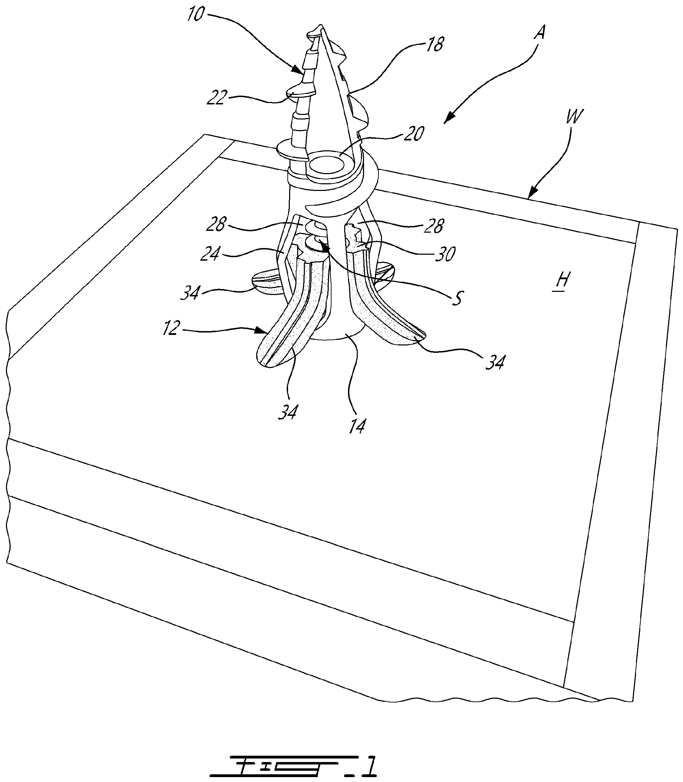

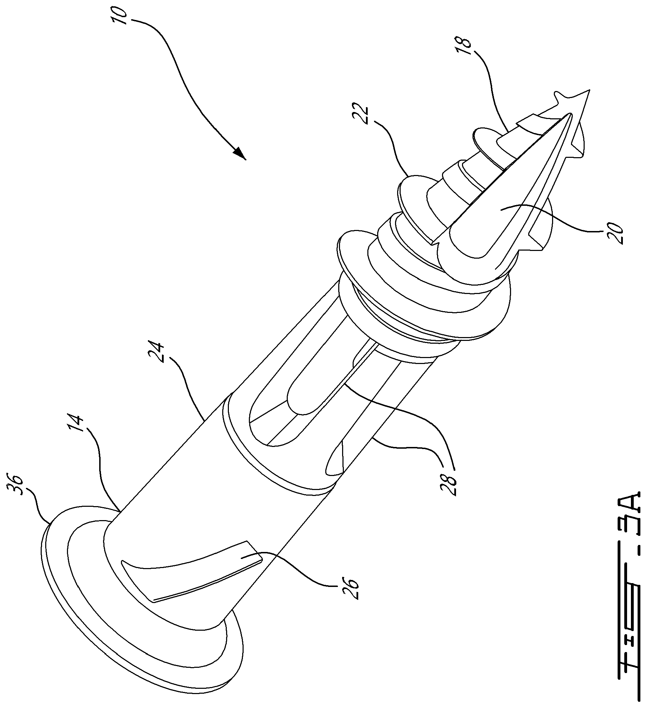

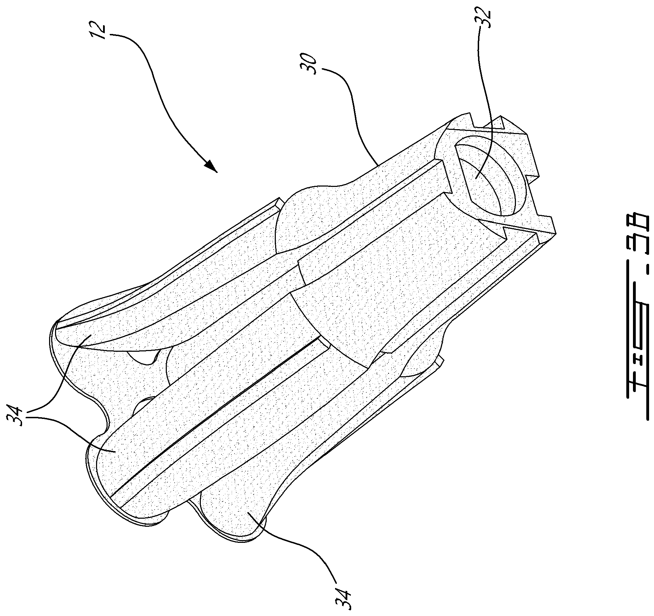

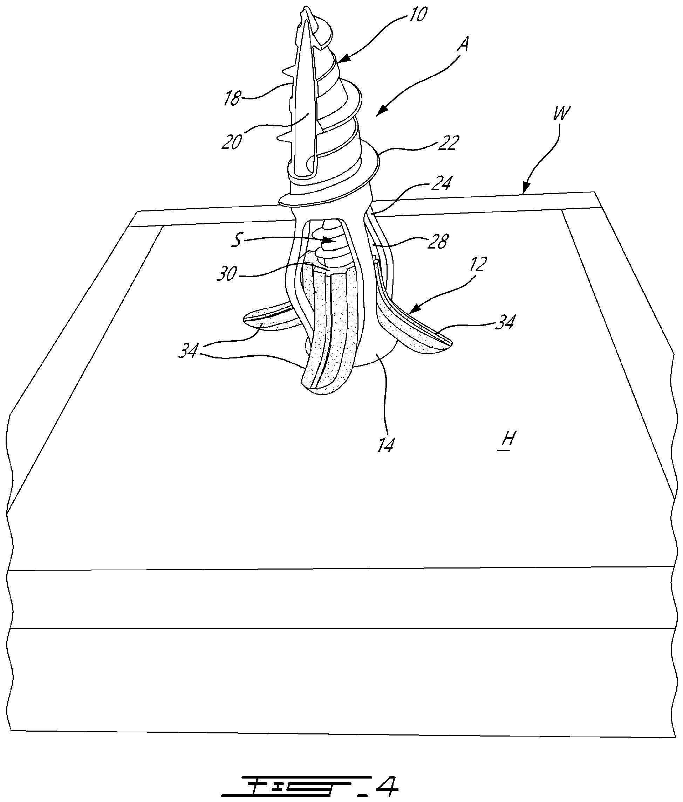

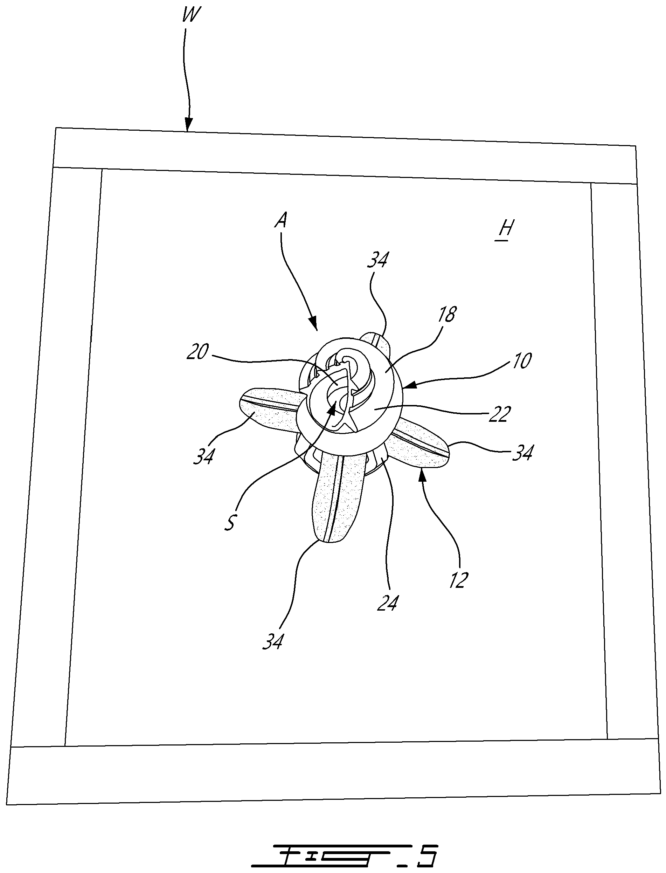

Figs. 1 to 5 illustrate a self-drilling wall anchor A, which is adapted to be mounted to a wall W for use with a fastener, such as a screw. The wall anchor A includes a rigid main body 10 and deformable anchor member 12.

The main body 10 includes a flanged proximal head 14 adapted to be engaged for instance by a powered bit, e.g. Philips, via a cruciform recess 16 defined in the proximal head 14. The main body 10 also includes a distal end 18, defining an open flute or opening 20, and an outer thread 22 interrupted by the flute 20. The distal end 18 is adapted to dig into the wall W and allow the anchor A to penetrate therein.

Between the proximal head 14 and the distal end 18, the main body 10 includes a central substantially cylindrical section 24, which includes a pair of fins 26 adapted to be lodged in the wall W once the anchor A has been installed therein. The cylindrical section 24 also defines four longitudinal slots 28.

The deformable anchor member 12 includes a rigid body 30 defining a hole 32 that is adapted to be tapped by a screw S, and four (4) deformable expansion wings or legs 34. The anchor member 12 is positioned within the cylindrical section or shank 24 of the main body 10, and with the deformable expansion legs 34 being lodged in the slots 28. The hole 32 could also define inner female threads that are adapted to mate with the male threads of the screw S.

To install the wall anchor A in the wall W, a screwdriver bit is inserted in the recess 16 and the distal end 18 is abutted onto the wall W, typically on a visible surface of a hollow wall. The screwdriver bit is rotated (typically via a powered drill) such that the distal end pierces the wall W and the anchor A is gradually introduced in the wall, that is until a flange 36 of the proximal head 14 reaches the wall W. In this position, the anchor member 12 is located behind the wall and the fins 26 are lodged in the wall W.

Then, the screw S is introduced in the anchor A via the recess 16, and the screw S is adapted to eventually engage the rigid body 30 of the anchor member 12 at the hole 32 thereof. Once a head of the screw S reaches the flange 36 of the proximal head 14, the screw S cannot further translationally advance, whereby continued rotation thereof (via the bit) causes the rigid body 30 to displace towards the wall W, thereby causing the deformable expansion legs 34 thereof to expand outwardly, through the slots 28, and into a general cruciform configuration, as seen in Figs. 1, 4 and 5. The expanded legs 34 abut the hidden side H of the wall W, thereby preventing the wall anchor A from being pulled out of the wall W, with the wall anchor being thus firmly engaged to the wall W.

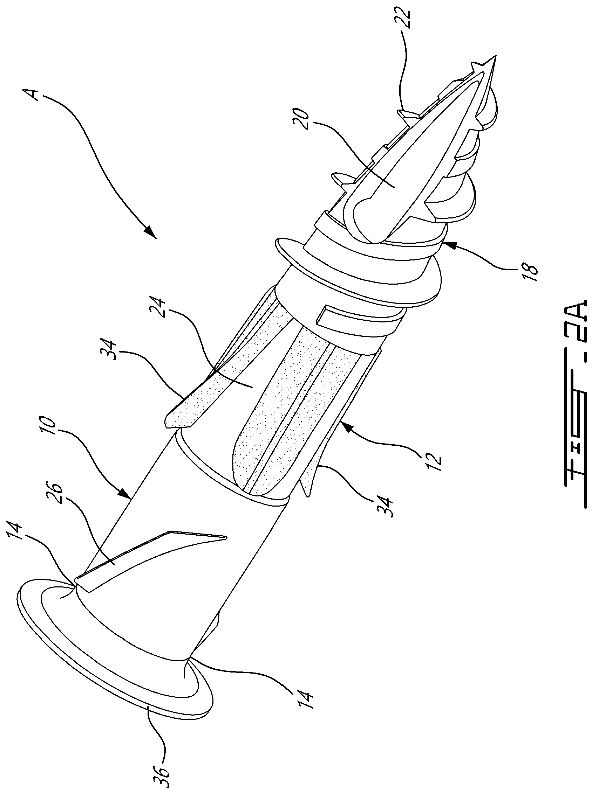

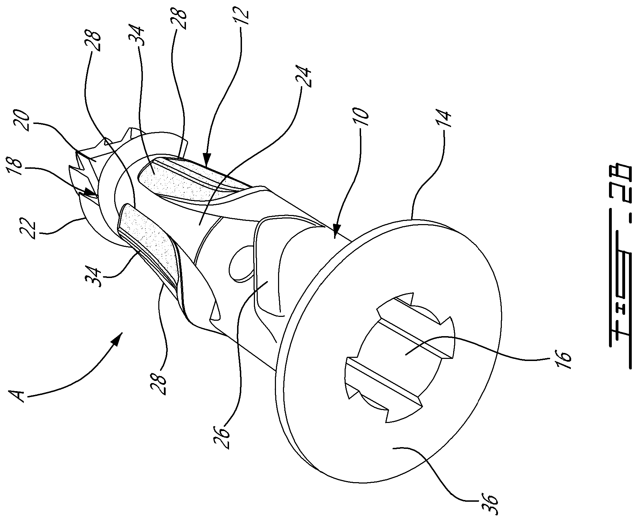

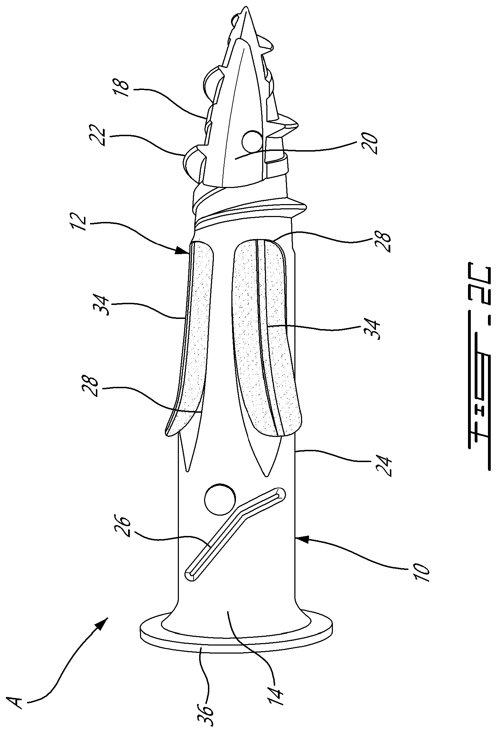

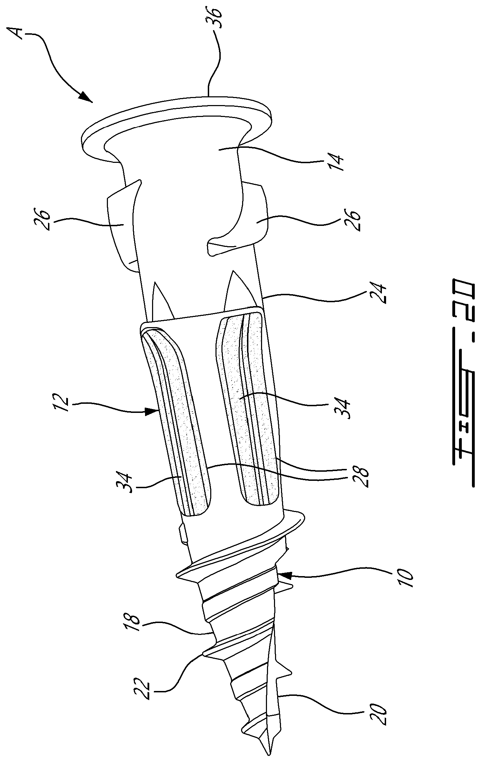

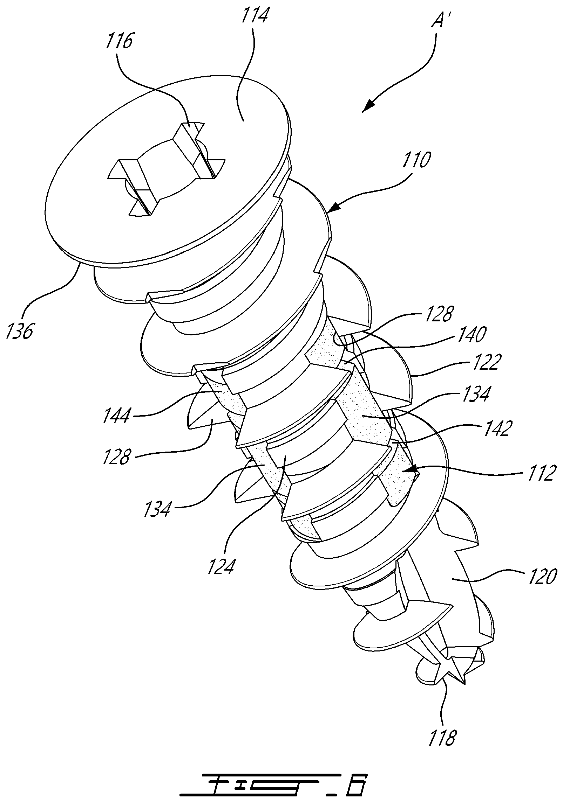

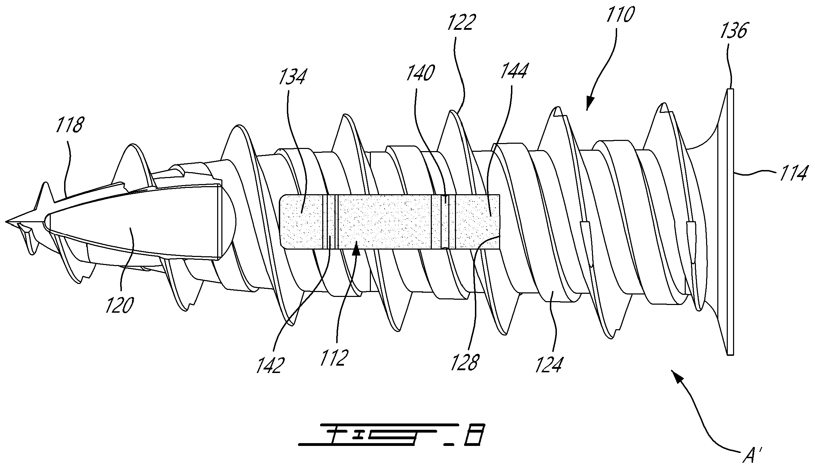

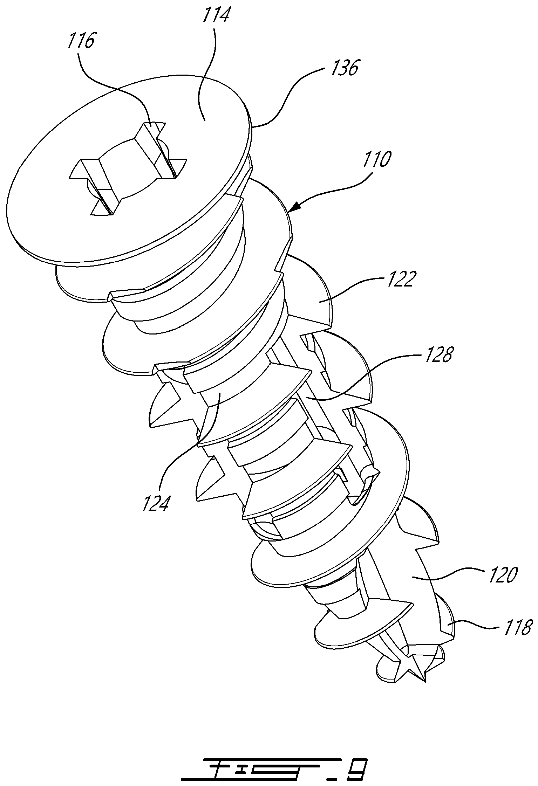

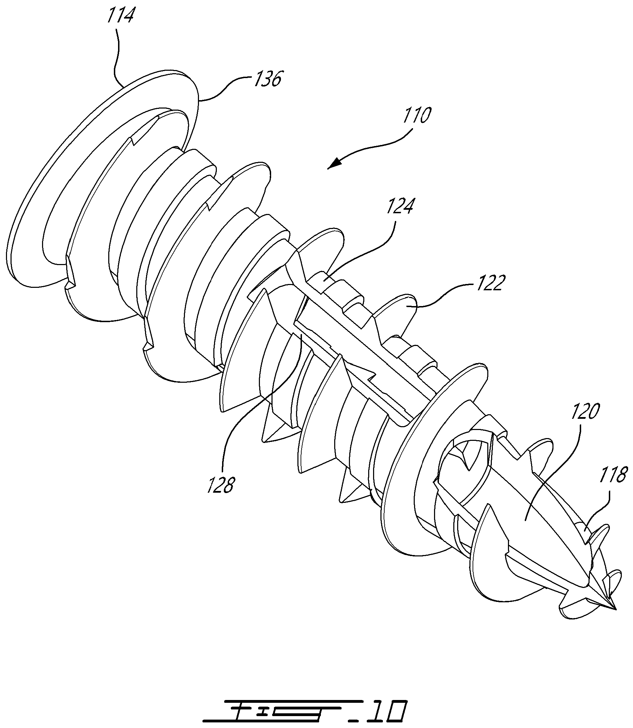

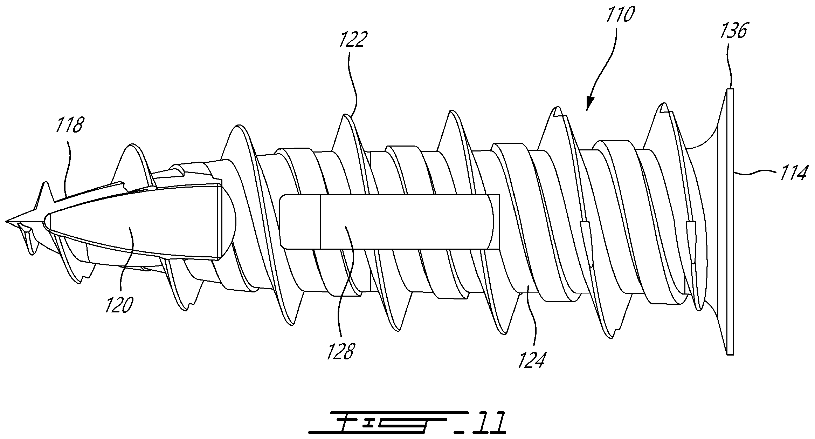

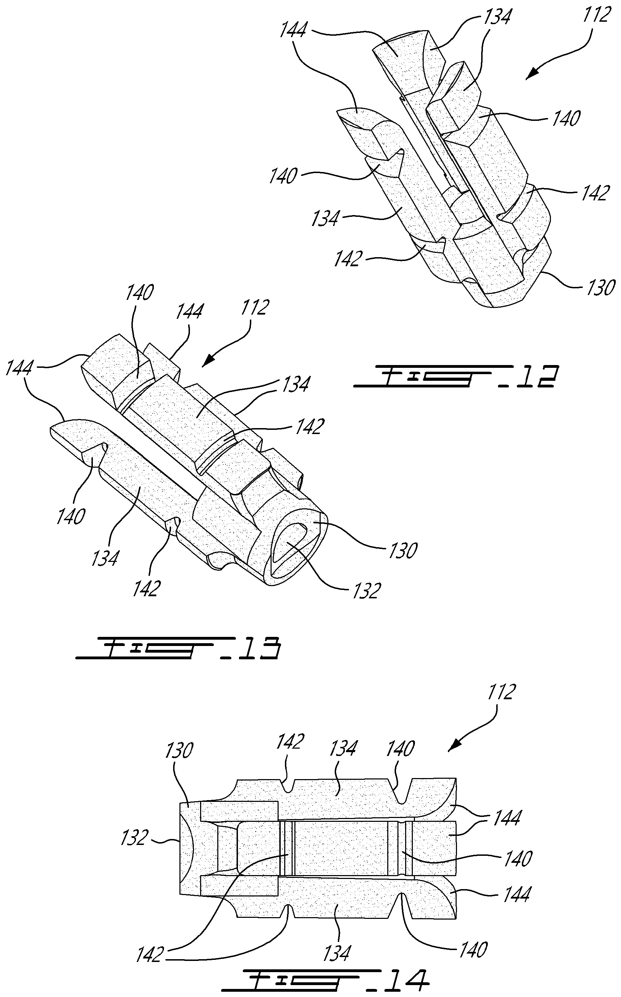

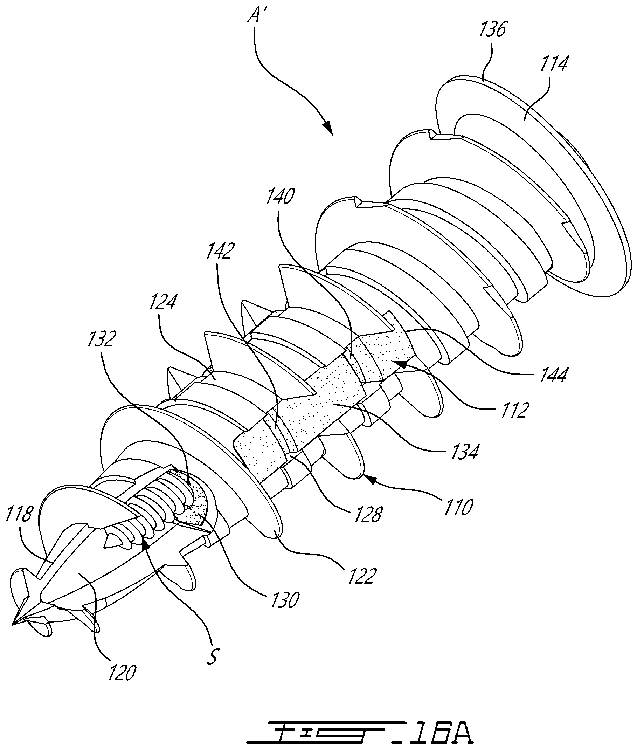

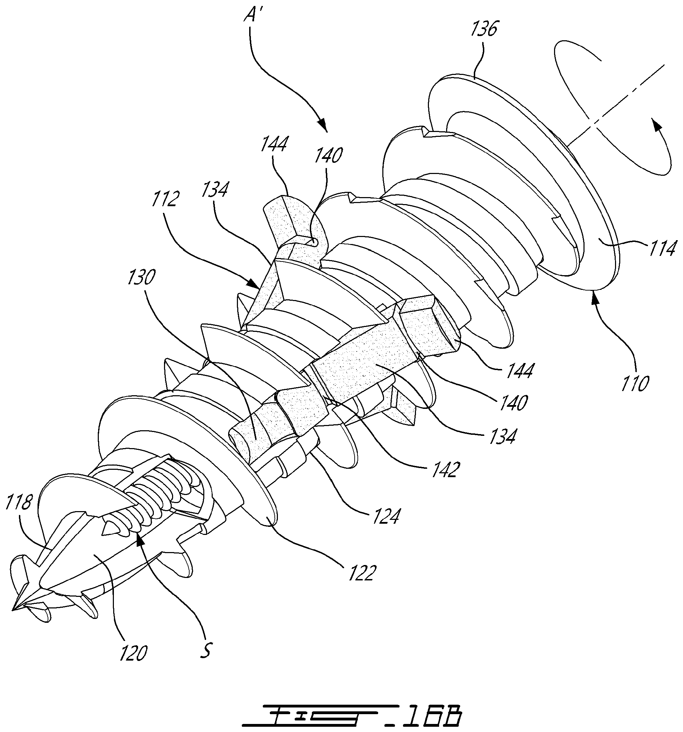

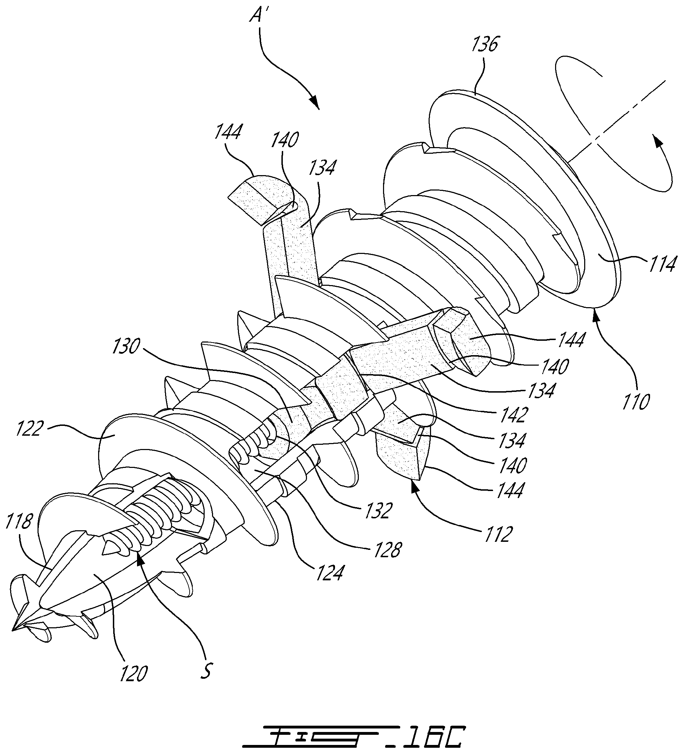

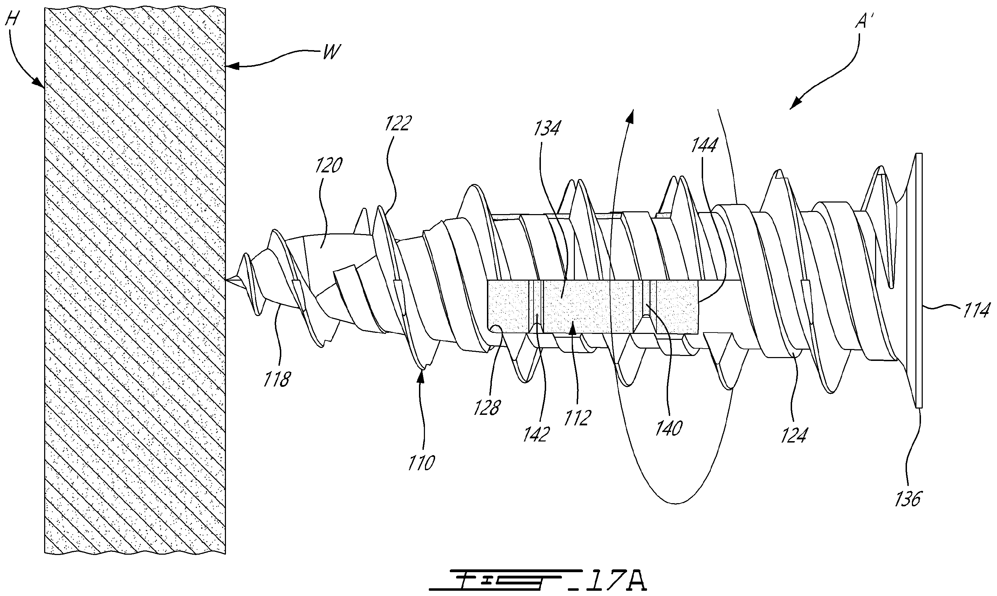

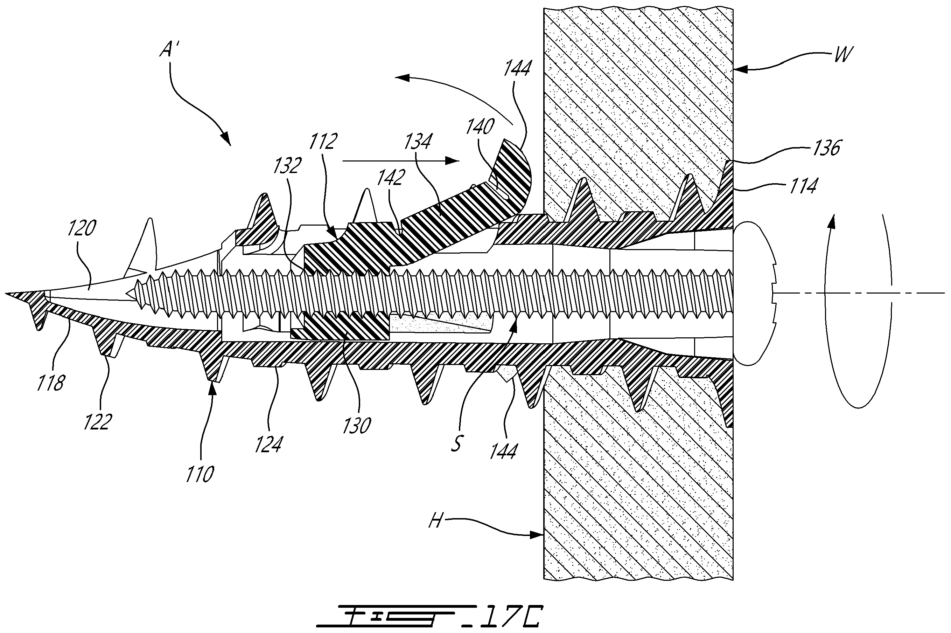

Now turning to Figs. 6 to 17D, a variant wall anchor A' is illustrated in Figs. 6 to 8, which wall anchor A' is similar to the wall anchor A of Figs. 1 to 5, whereby in the following description and drawings that pertain to the wall anchor A', components of wall anchor A' which are identical in function and identical and/or similar in structure to corresponding components of the wall anchor A of Fig. 1 (and Figs. 2 to 5) bear the same reference as in Fig. 1 to 5, but are tagged with the prefix "1" and are thus in the hundreds with the last two digits thereof being identical to the reference numerals of corresponding components of wall anchor A. New components (or components not identified for wall anchor A) provided for wall anchor A' start at reference numeral 140.

Generally, both wall anchors A and A' are similar, except for there being four (4) longitudinal slots in wall anchor A, whereas there are three (3) such longitudinal slots in wall anchor A'. Also, the deformable expansion legs 134 in the wall anchor A' include distinct hinges. Furthermore, the pair of fins 26 of wall anchor A are replaced in wall anchor A' by a thread, which thread extends all the way to the distal end 118, being interrupted by the longitudinal slots 128 and by the open flute 120. As the thread in wall anchor A' extends to, and merges with, the outer tread provided at the distal end 118, the complete outer thread in anchor A', which extends from the proximal head 114 to the distal end 118, bears the reference numeral 122.

Therefore, Figs. 6 to 8 illustrate a self-drilling bi-material wall anchor A', which is adapted to be mounted to the wall W for use with a fastener, such as the screw S. The wall anchor A' includes a rigid main body 110 and a deformable anchor member 112. The rigid main body 110 is typically made with a "charged" material (for instance, a plastic such as nylon that is reinforced with fiberglass) for cutting and penetrating the wall W. The deformable anchor member 112 is typically made of a "non charged" material (for instance, a plastic without fiberglass) to provide the required flexibility, e.g. in the legs 134. The two materials, namely the material of the rigid main body 110 and the material of the anchor member 112, are non-bounding materials to allow for their independent functions and, more particularly, for allowing the legs 134 of the latter to displace relative to the former while retaining their chemical integrity.

The main body 110 includes a proximal head 114, which defines a flange 136 and which is adapted to be engaged for instance by a powered bit, e.g. of Philips configuration, via the cruciform recess 116 defined in the proximal head 114. The main body 110 also includes a distal end 118, with a "side" opening or open flute 120 being defined therein, with an outer thread 122 being provided on the distal end 118 although interrupted by the flute 120. As previously mentioned, the outer thread 122 in the wall anchor A' (distinctively from the outer thread 22 of the wall anchor A of Figs. 1 to 5) extends from behind the flange 136 of the proximal head 114 generally continuously all the way to the distal end 118, the outer thread 122 being interrupted by the longitudinal slots 128 and by the flute 120.

When the anchor A' is rotated, typically via a powered screwdriver bit engaged in the cruciform recess 116, the distal end 118 is adapted to dig into the wall W and allow the anchor A' to penetrate therein.

Between the proximal head 114 and the distal end 118, the main body 110 includes a central substantially cylindrical section 124, which defines the three longitudinal slots 128.

The deformable anchor member 112 includes a distal rigid body 130 defining a hole 132 that is adapted to be tapped by the screw S, and three (3) deformable expansion legs 134 located proximally of the rigid body 130. The anchor member 112 is positioned within the cylindrical section or shank 124 of the main body 110, and with the rigid body 130 acting basically as a nut (inwardly unthreaded or female-threaded) and being located substantially within a distal end of the cylindrical section 124 and with the deformable expansion legs 134 being lodged, in registry, along the longitudinal slots 128. The hole 132 could also define inner female threads that are adapted to mate with the male threads of the screw S.

To install the wall anchor A' in the wall W, a screwdriver bit is inserted in the recess 116 and the distal end 118 is abutted onto the wall W, typically on a visible surface of the hollow wall W. The screwdriver bit is rotated (typically via a powered drill) such that the distal end 118 pierces the wall W and the anchor A' is gradually introduced in the wall W, that is until the flange 136 of the proximal head 114 reaches the wall W. In this position, the anchor member 112 is located behind the wall W and the proximal section of the outer thread 122 is lodged in the wall W.

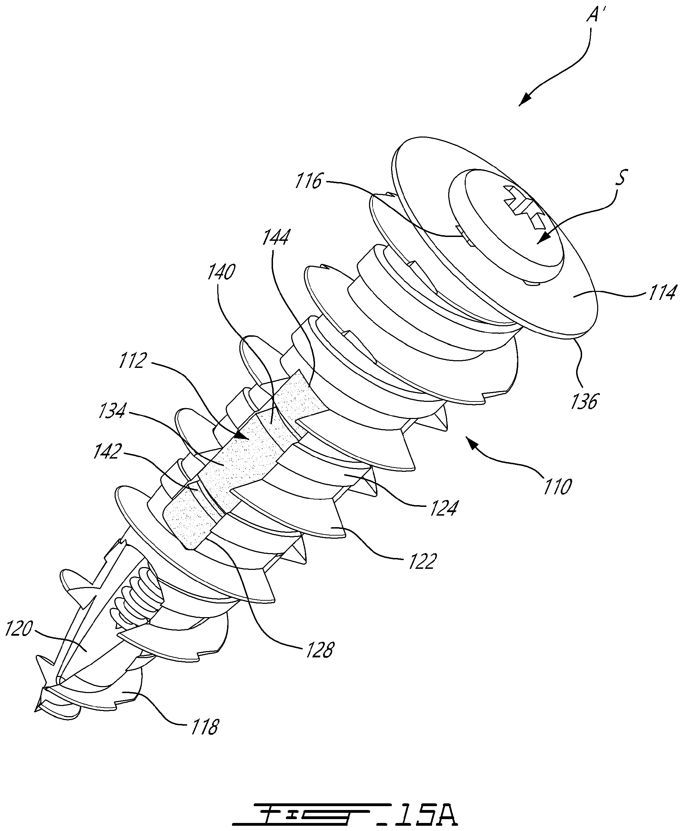

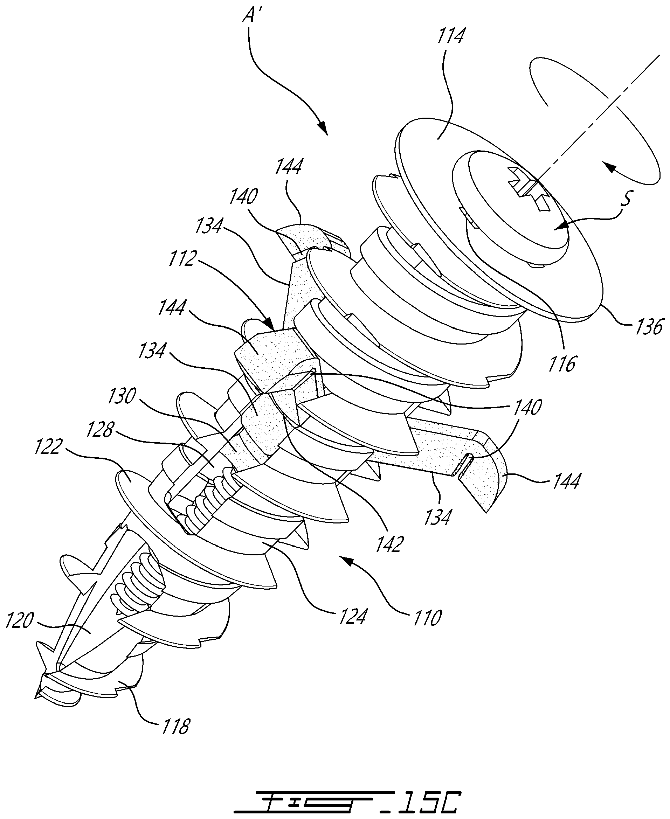

Then, the screw S is introduced in the anchor A' via the recess 116, and the screw S is adapted to eventually engage the rigid body 130 of the anchor member 112 at the hole 132 thereof, with the screw S either self-tapping the rigid body 130 or threadably engaging the internal thread of the rigid body 130 if the rigid body 130 already includes a female thread. Once a head of the screw S reaches the flange 136 of the proximal head 114, the screw S cannot further translationally advance, whereby continued rotation thereof (via the bit) causes the rigid body 130 to displace towards the wall W (as the rigid body 130 is threadably engaged to the screw S), thereby causing the deformable expansion legs 134 thereof to expand outwardly, through the slots 128, and into a general tripodal configuration, as seen in Figs. 15C, 16C and 17D, wherein the expanded legs 134 extend radially beyond the outer threads 122. The expanded legs 134 abut the hidden side H of the wall W, thereby preventing the wall anchor A' from being pulled out of the wall W, with the wall anchor A' being thus firmly engaged to the wall W.

The wall anchor A' is held captive to the wall W both by the engagement of the proximal section of the threads 122 of the main body 110 within the wall W and by the legs 134 of the rigid body 130 abutting the hidden side H of the wall W.

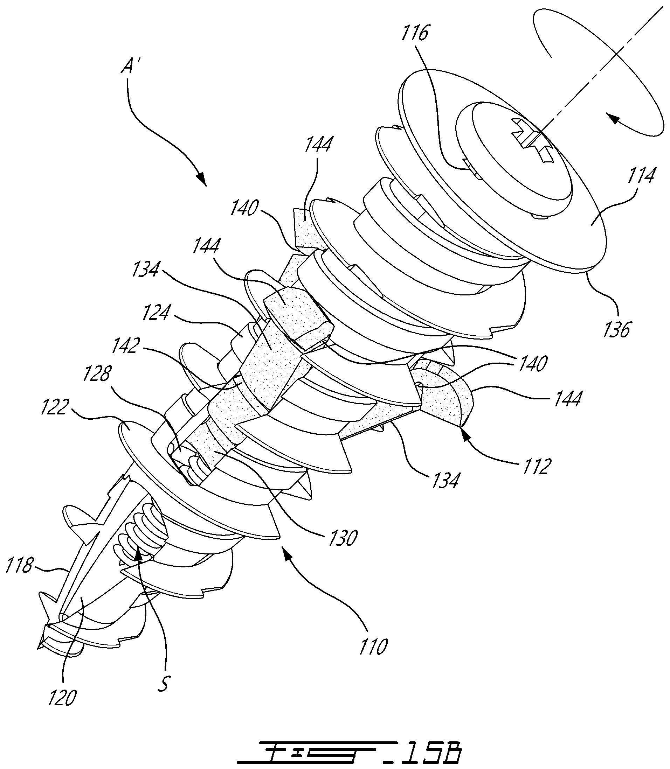

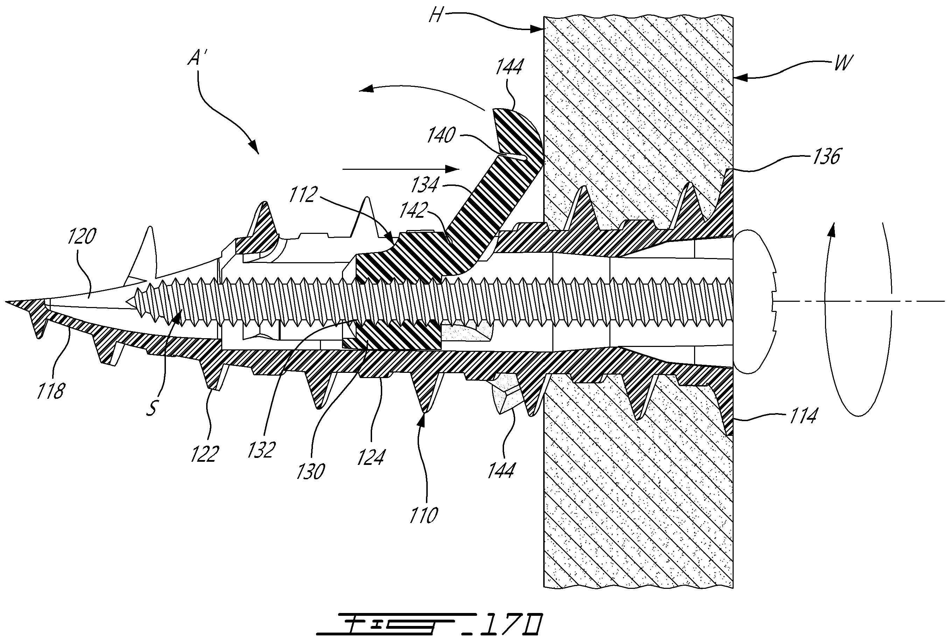

Each expansion leg 134 includes a pair of cuts defined in the outside thereof, which act as hinges, as well as an angled proximal foot 144. The proximal foot 144, when the anchor member 112 is pulled by the screw S, is adapted to outwardly climb along the cylindrical portion 124 at a proximal end of the longitudinal slot 128, as seen in Figs. 15B, 16B and 17C. At the end of the installation, the proximal foot 144 lies, generally flat, against the hidden side H of the wall W (see Fig. 17D).

As to the pair of cuts (or notches) defined in each expansion leg 134, these cuts include a distal higher cut 142 and a typically more pronounced proximal lower cut 140. The distal higher cuts 142 are adapted to control the positioning of the legs 134 at the back of the wall W and a solid fold back of the distal portion of each leg 134, adjacent the rigid body 130. The proximal lower cuts 140 basically are adapted to force the proximal free end or foot 144 of each leg 134 to bind flat on the hidden side H of the wall W.

Typically, the anchor member 112 will include two, three or four expansion legs 134.

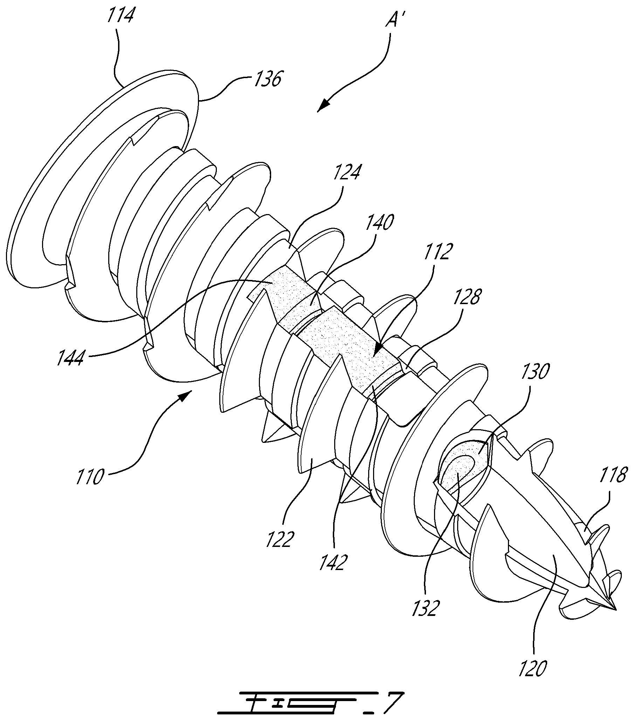

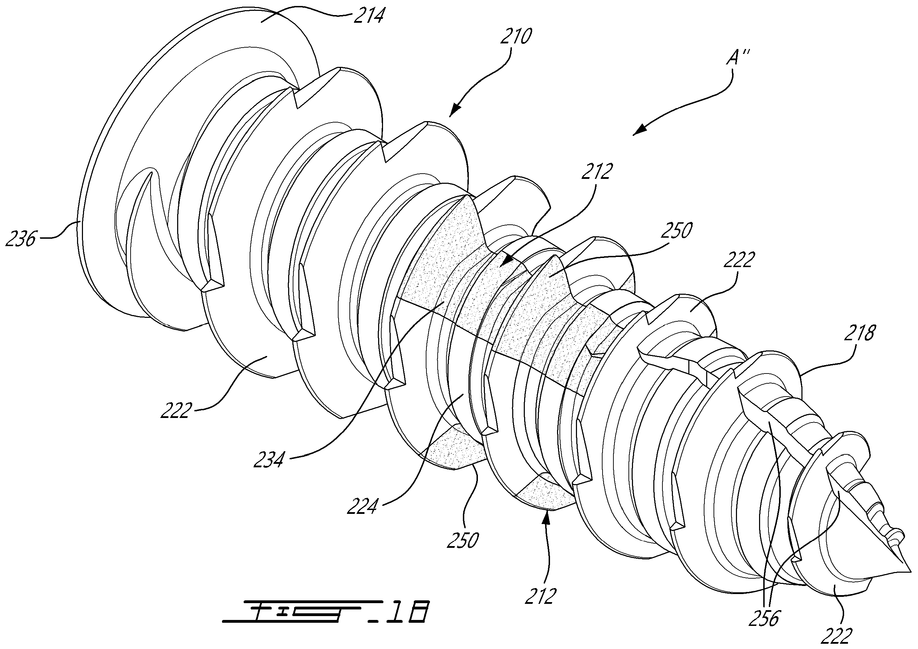

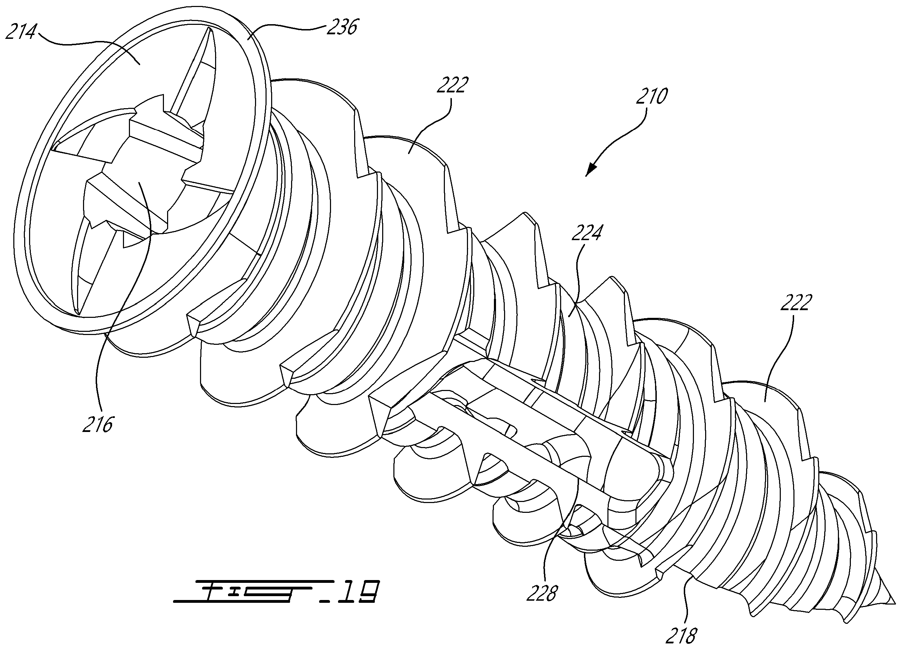

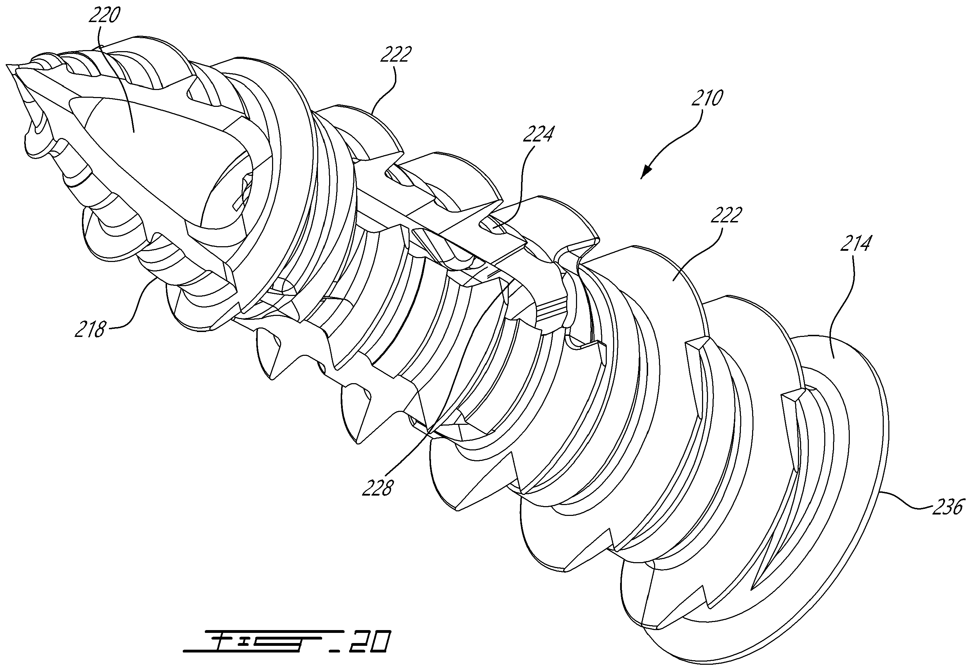

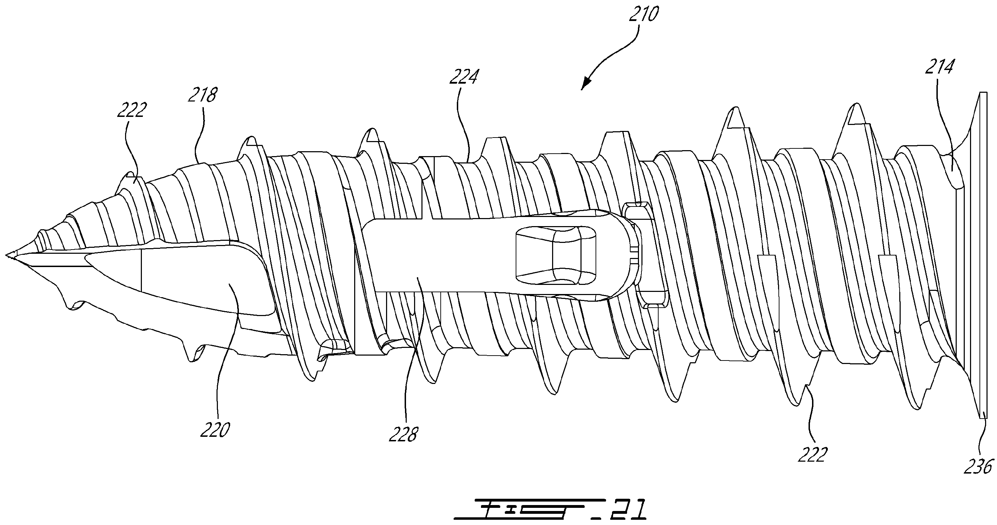

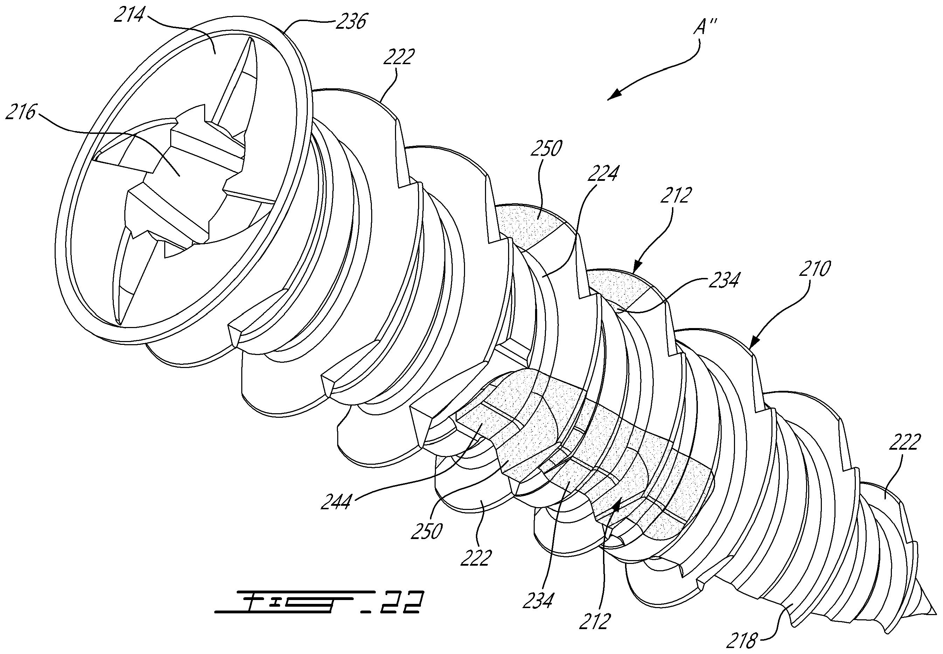

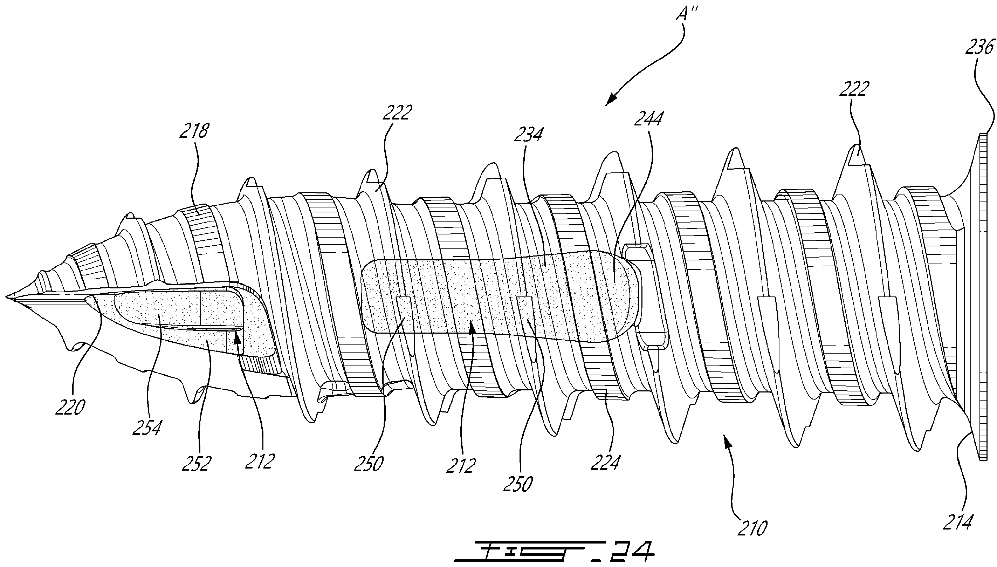

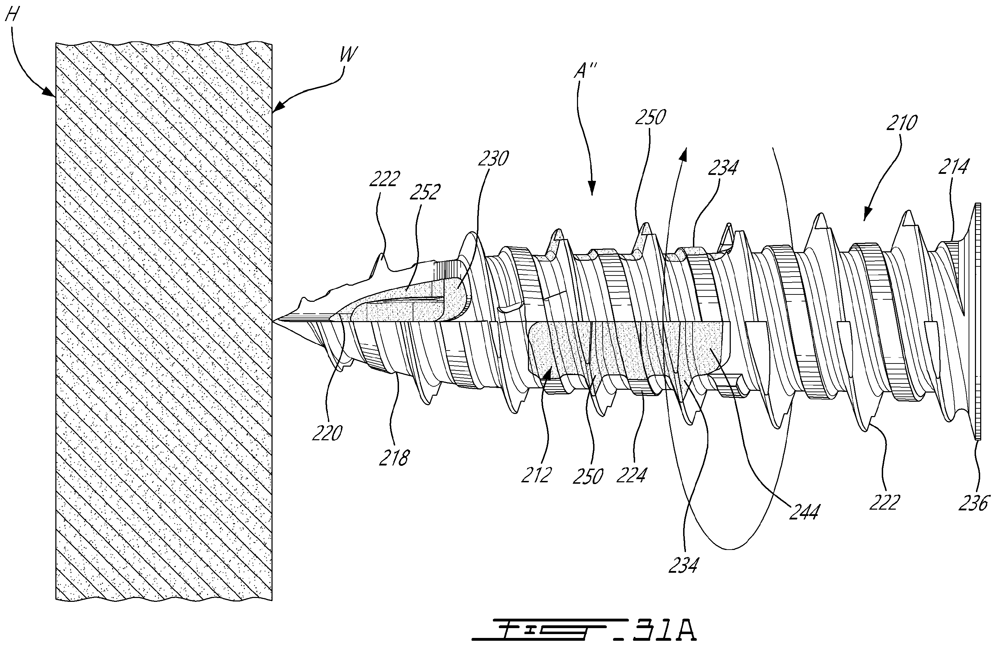

Now turning to Figs. 18 to 31D, a wall anchor A" is illustrated in Fig. 18, which wall anchor A" is similar to the wall anchor A' of Figs. 6 to 17D, whereby in the following description and drawings that pertain to the wall anchor A", components of wall anchor A" which are substantially identical in function and substantially identical and/or similar in structure to corresponding components of the wall anchor A' of Fig. 6 (and Figs. 7 to 17D) bear the same reference as in Figs. 6 to 17D, but are tagged with the prefix "2" and are thus in the two hundreds with the last two digits thereof being identical to the reference numerals of corresponding components of the wall anchor A' (or possibly of the wall anchor A of Figs. 1 to 5). New components (or components not identified for wall anchors A or A') provided for wall anchor A" start at reference numeral 250.

Generally, the wall anchors A' and A" have some similarities, and the notable differences of the anchor A" will be hereinafter discussed in more details.

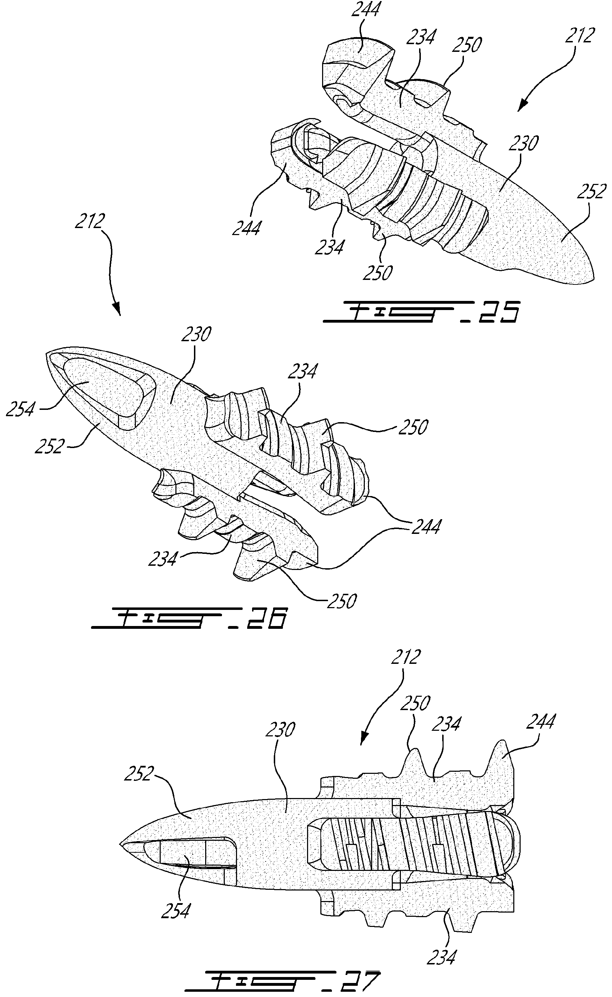

For instance, the legs 234 of the deformable anchor member 212 of the anchor A" are not provided with the hinges or cuts 140 and 142 found in the legs 134 of the anchor A'. On the other hand, the legs 234 of the anchor A" are provided with external threads 250 that are continuous with the threads 222 of the main body 210 and thus fill the gaps in the threads 222 as the threads 22 are interrupted where the slots 228 are defined. The external threads 250 are apparent from the figures, including on Figs. 25 to 27 that show the deformable anchor member 212 in isolation.

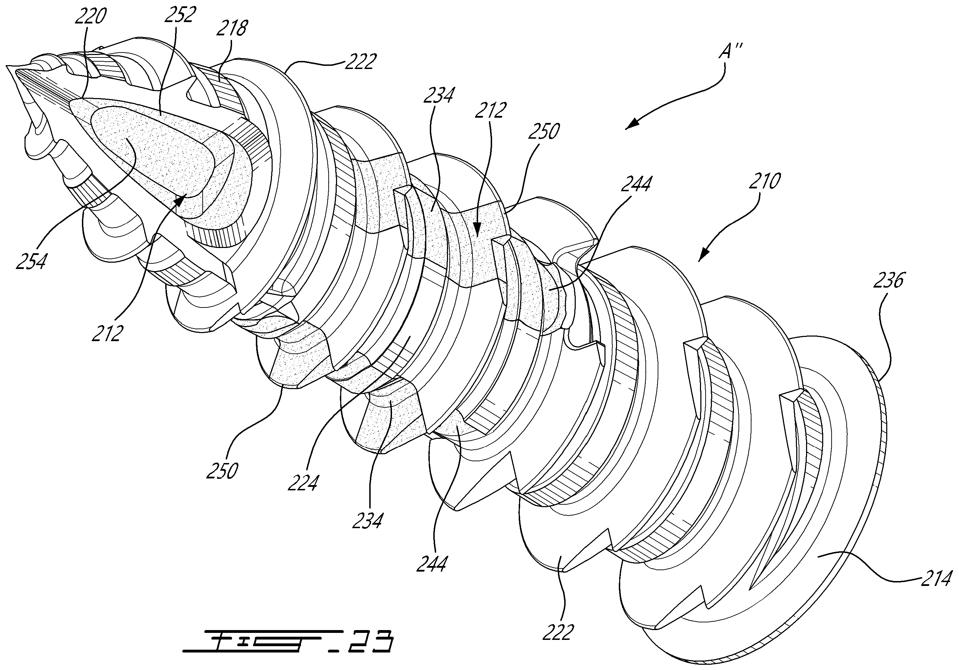

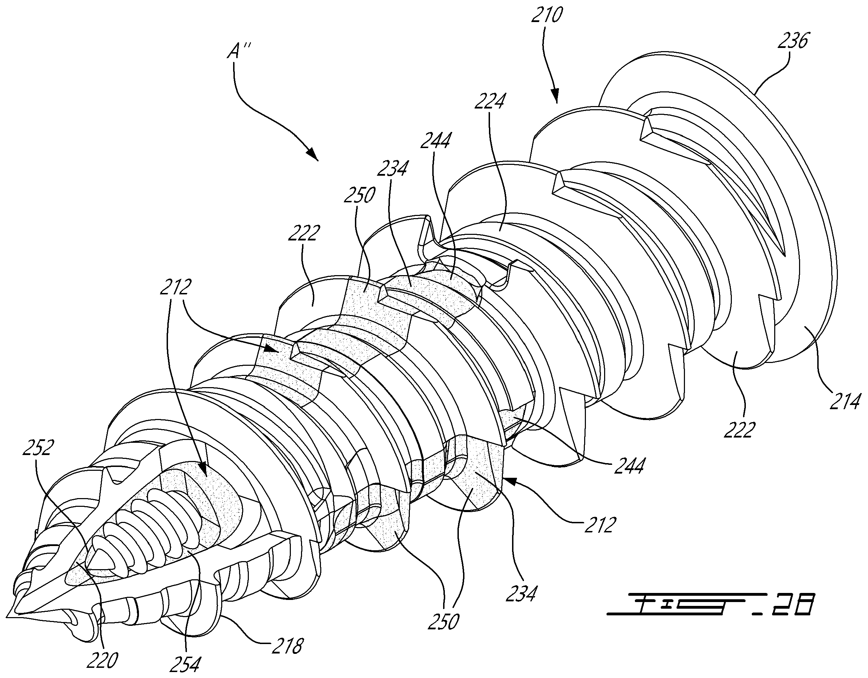

Also, the deformable anchor member 212 of the anchor A" extends distally further within the hollow section 224 than the deformable anchor member 112 of the anchor A'. Indeed, as best seen for instance in Figs. 23, 28 and 32B, the deformable anchor member 212 extends up to or very near the distal end 218 of the main body 210. The deformable anchor member 212 includes a distal tapered open end 252 that is substantially complementary in its outside configuration so as to mate with corresponding internal walls of the distal end 218. The tapered open end 252 defines an opening 254 that registers with the flute or opening 220 defined in the distal end 218 of the main body 210. This is well shown in Figs. 23 and 28.

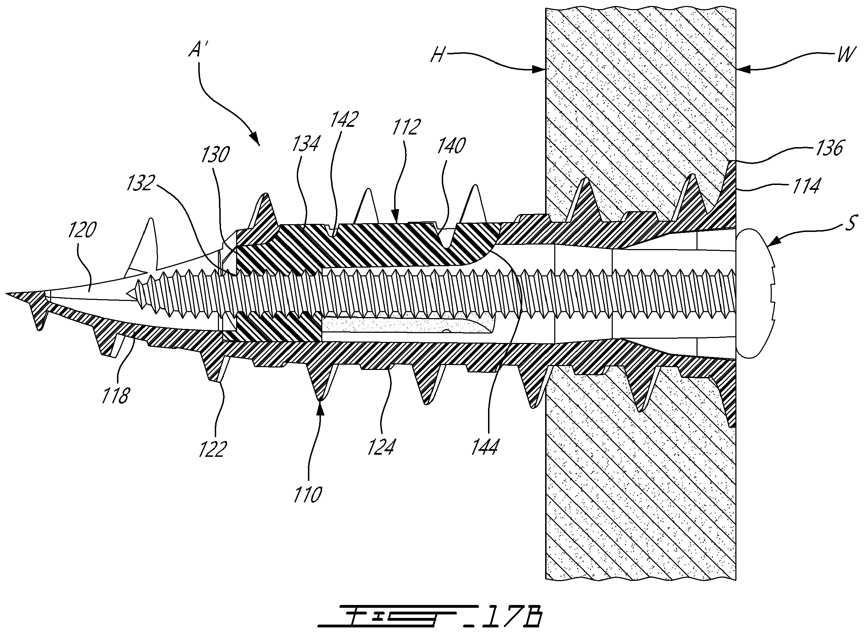

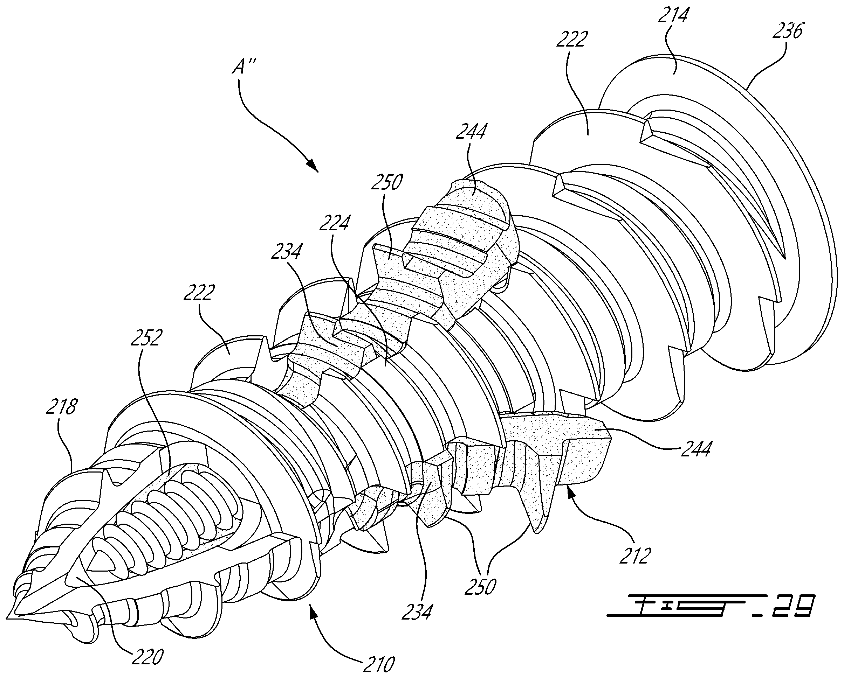

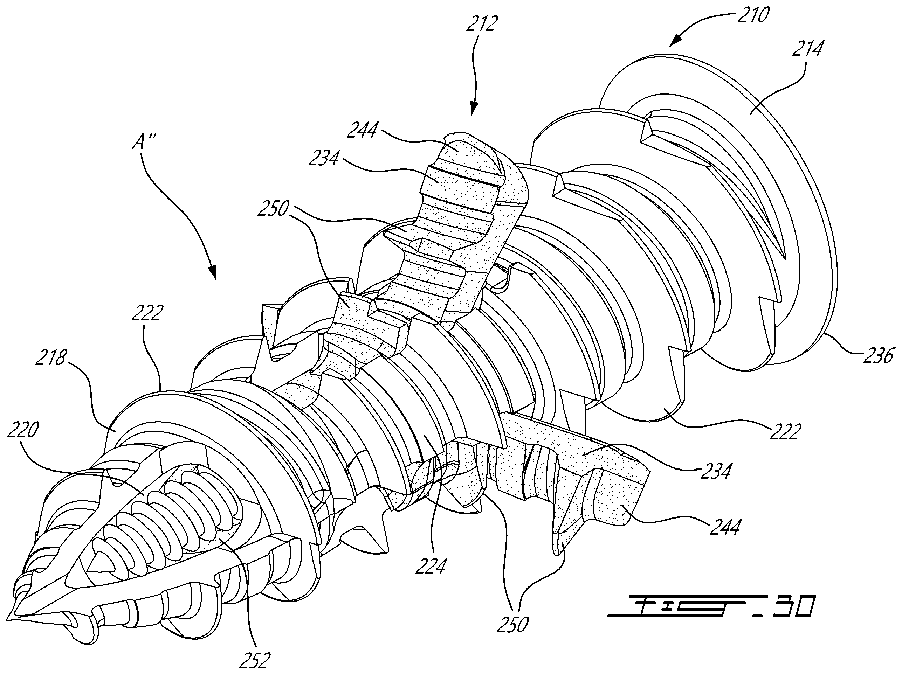

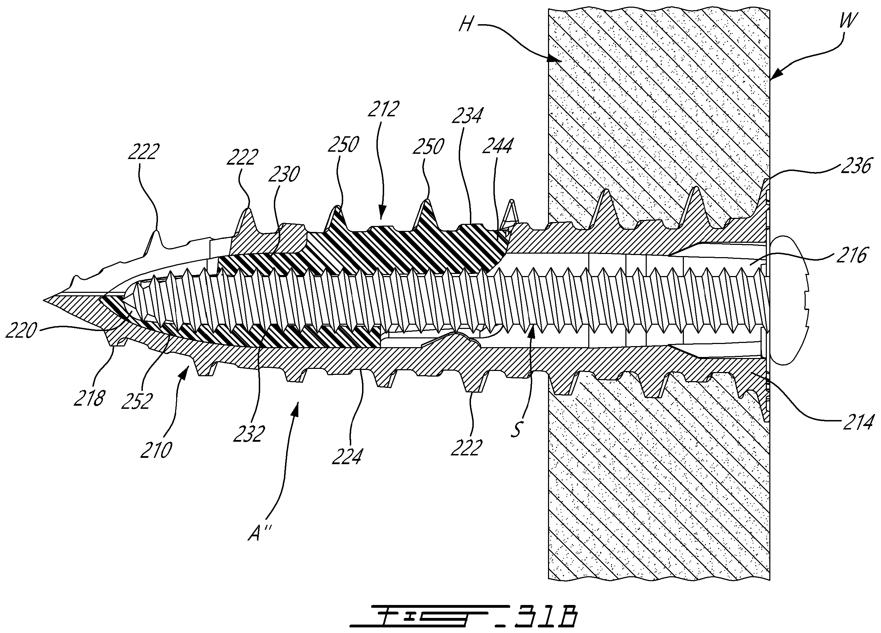

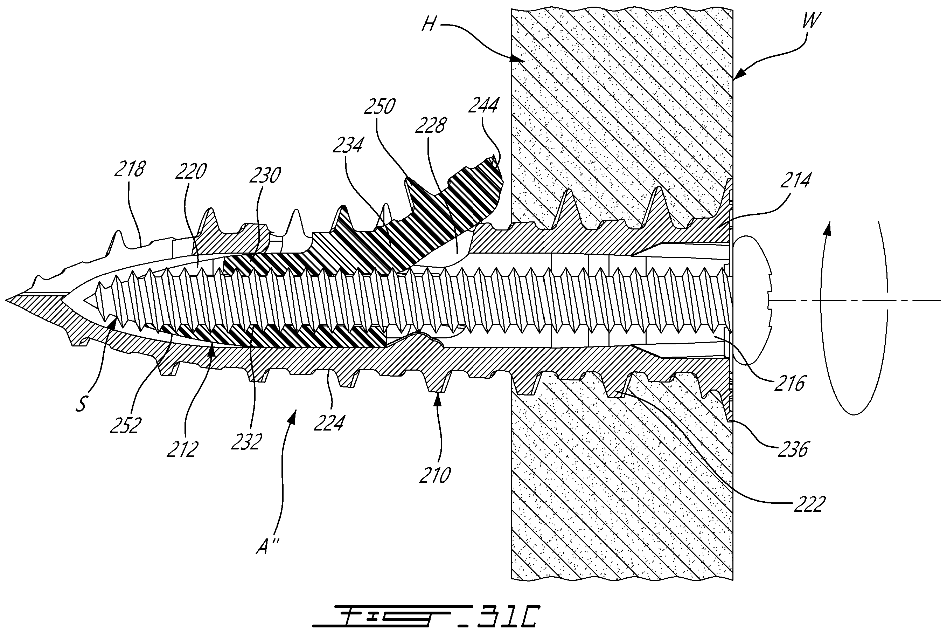

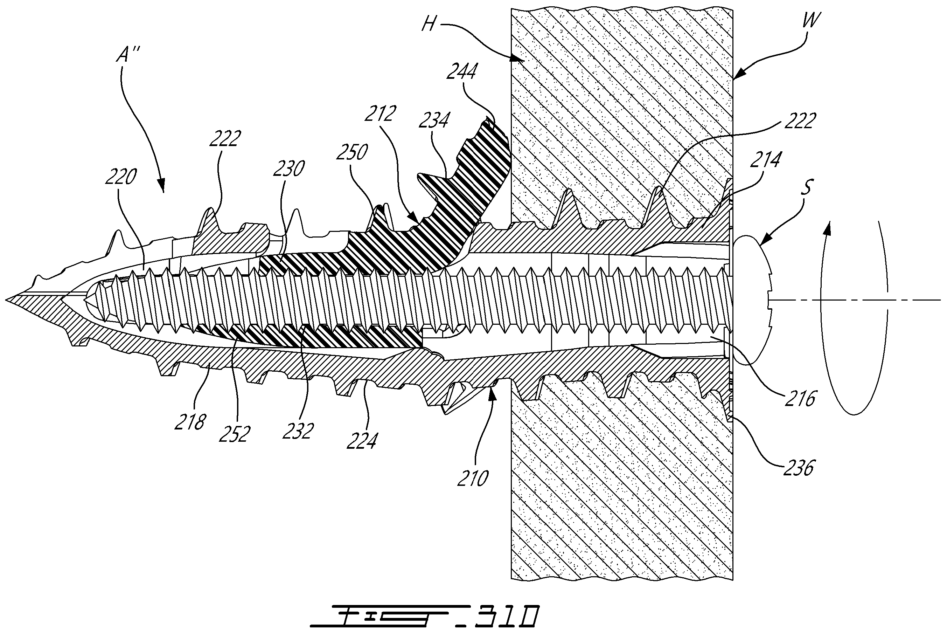

The deformable anchor member 212 is provided with the distal tapered open end 252 so that the threads of the screw S can tap more of the deformable anchor member 212, whereby the screw S is better engaged and gripped to the deformable anchor member 212 it has engagingly tapped. Therefore, when the deformable anchor member 212 is withdrawn by the screw S towards the head 214 of the main body 210, the two components, namely the screw S and the deformable anchor member 212, are more solidly engaged to each other thereby aiding in the displacement of the deformable anchor member 212 from its at rest position shown in Figs. 23, 25-27, 28, 31A and 31B to its gradually expanded positon shown sequentially in Figs. 31C and 31D, as well as in Figs. 29 and 30. The increased engagement between the threads of the screw S and the deformable anchor member 212 can be readily appreciated when comparing Fig. 17B for the anchor A' with Fig. 31B for the anchor A"

Referring mainly to Fig. 18, another feature found on the anchor A" resides in a blade-like element 256 defined on the distal end 218 of the main body 210, and located generally diametrically opposite the flute or opening 220 defined in the distal end 218. The blade-like element 256 is similar to a shoulder and typically extends in a plane that intersects an axis of the anchor A". Therefore, the blade-like element 256 is generally perpendicular to the anchor A" along a longitudinal direction of the anchor A".

The blade-like element 256 extends outwardly substantially as does the outside diameter of the shank 224 so as to contribute to the anchor A" defining a hole in the wall W of proper dimensions.

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the embodiments and non-limiting, and it will be understood by persons skilled in the art that other variants and modifications may be made without departing from the scope of the embodiments as defined in the claims appended hereto.

## Claims

1. A wall anchor (A") for mounting to a hollow wall, comprising a main body (210) and an anchor member (112), the main body (210) including a proximal end adapted to be engaged by a rotatable tool to rotate said anchor (A") about a longitudinal axis thereof and to cause it to gradually engage a wall, a distal end (218) adapted to cut through the wall as said anchor (A") is rotated, and a shank (224) between said proximal and distal (218) ends, said distal end (218) defining on an outer surface thereof an elongated blade-like shoulder (256) extending substantially longitudinally along the main body (210) and adapted to cut the wall material when the anchor (A") is rotated,
wherein said shank (224) defines at least one slot (228), the anchor member (212) including at least one expandable leg (234) and a body defining a hole, the expandable leg (234) being in registry with the slot (228) and being displaceable between inwardly collapsed and outwardly expanded positions, said expandable leg (234) being in the collapsed position thereof when said anchor (A") is rotated to mount it to the wall and being located distally past a rear surface of the wall once said anchor (A") is mounted to the wall, said anchor (A") being adapted to receive therein a threaded fastener and to threadably engage the body of the anchor member (212) distally of said leg (234) such that sufficient rotation of the threaded fastener retracts said body of the anchor member (112) towards said proximal end thereby causing said expandable leg (234) to extend outwardly through the slot (228) to the expanded position of the expandable leg (234), and
wherein the main body (210) and the anchor member (212) are distinct components assembled together to form the anchor.

2. The wall anchor as defined in Claim 1, wherein the blade-like shoulder (256) includes a surface that extends substantially radially outwardly on the distal end (218).

3. The wall anchor as defined in any one of Claims 1 and 2, wherein the blade-like shoulder (256) extends outwardly to a similar extent as an outside surface of the shank (224).

## Patentansprüche

1. Ein Wandanker (A") zur Befestigung an einer Hohlwand, der einen Hauptkörper (210) und ein Ankerelement (112) umfasst, wobei der Hauptkörper (210) ein proximales Ende aufweist, das dazu ausgelegt ist, von einem drehbaren Werkzeug in Eingriff genommen zu werden, um den Anker (A") um eine Längsachse desselben zu drehen und zu bewirken, dass er allmählich in eine Wand eingreift, ein distales Ende (218), das dazu ausgelegt ist, die Wand zu durchschneiden, während der Anker (A") gedreht wird, und einen Schaft (224) zwischen dem proximalen und dem distalen Ende (218), wobei das distale Ende (218) an seiner Außenfläche eine längliche, klingenartige Schulter (256) aufweist, die sich im Wesentlichen in Längsrichtung entlang des Hauptkörpers (210) erstreckt und dazu ausgelegt ist, das Wandmaterial zu durchschneiden, wenn der Anker (A") gedreht wird,
wobei der Schaft (224) mindestens einen Schlitz (228) aufweist, das Ankerelement (212) mindestens einen ausfahrbaren Schenkel (234) und einen Körper umfasst, der eine Halterung bildet, der ausfahrbare Schenkel (234) mit dem Schlitz (228) fluchtet und zwischen einer nach innen eingeklappten und einer nach außen ausgefahrenen Position verschiebbar ist, sich der ausfahrbare Schenkel (234) in seiner eingezogenen Position befindet, wenn der Anker (A") gedreht wird, um ihn an der Wand zu befestigen, und sich distal hinter einer Rückseite der Wand befindet, sobald der Anker (A") an der Wand befestigt ist, der Anker (A") dazu ausgelegt ist, ein Gewindebefestigungselement aufzunehmen und mit dem Körper des Ankerelements (212) distal des Schenkels (234) in Gewindeeingriff zu treten, so dass eine ausreichende Drehung des Gewindebefestigungselements den Körper des Ankerelements (112) in Richtung des proximalen Endes zurückzieht, wodurch der ausfahrbare Schenkel (234) sich nach außen durch den Schlitz (228) in die ausgefahrene Position des ausfahrbaren Schenkels (234) ausdehnt, und
wobei der Hauptkörper (210) und das Ankerelement (212) separate Bauteile sind, die miteinander verbunden werden, um die Verankerung zu bilden.

2. Der Wandanker nach Anspruch 1, wobei die klingenartige Schulter (256) eine Oberfläche aufweist, die sich am distalen Ende (218) im Wesentlichen radial nach außen erstreckt.

3. Der Wandanker nach einem der Ansprüche 1 und 2, wobei sich die klingenartige Schulter (256) in ähnlichem Maße nach außen erstreckt wie eine Außenfläche des Schafts (224).

## Revendications

1. Ancrage mural (A") destiné à être monté sur un mur creux, comprenant un corps principal (210) et un élément d'ancrage (112), le corps principal (210) incluant une extrémité proximale conçue pour être engagée par un outil rotatif afin de faire tourner ledit ancrage (A") autour d'un axe longitudinal de celui-ci et de l'amener à s'engager progressivement dans un mur, une extrémité distale (218) conçue pour transpercer le mur à mesure que ledit ancrage (A") est tourné, et une queue (224) entre lesdites extrémités proximale et distale (218), ladite extrémité distale (218) définissant sur une surface extérieure de celle-ci un épaulement semblable à une lame allongée (256) s'étendant sensiblement longitudinalement le long du corps principal (210) et conçu pour transpercer le matériau du mur lorsque l'ancrage (A") est tourné,
où ladite queue (224) définit au moins une fente (228), l'élément d'ancrage (212) incluant au moins une patte extensible (234) et un corps définissant un trou, la patte extensible (234) étant en alignement avec la fente (228) et étant déplaçable entre des positions effondrée vers l'intérieur et déployée vers l'extérieur, ladite patte extensible (234) se trouvant dans sa position effondrée lorsque ledit ancrage (A") est tourné pour le monter sur le mur et étant située distalement derrière une surface arrière du mur une fois que ledit ancrage (A") est monté sur le mur, ledit ancrage (A") étant conçu pour recevoir en son sein une fixation filetée et pour engager par vissage le corps de l'élément d'ancrage (212) de manière distale par rapport à ladite patte (234) de telle sorte qu'une rotation suffisante de la fixation filetée rétracte ledit corps de l'élément d'ancrage (212) vers ladite extrémité proximale amenant ainsi ladite patte extensible (234) à se déployer vers l'extérieur à travers la fente (228) jusqu'à la position déployée de la patte extensible (234), et
où le corps principal (210) et l'élément d'ancrage (212) sont des composants distincts assemblés ensemble pour former l'ancrage.

2. Ancrage mural selon la revendication 1, dans lequel l'épaulement semblable à une lame allongée (256) inclut une surface qui s'étend sensiblement radialement vers l'extérieur sur l'extrémité distale (218).

3. Ancrage mural selon l'une quelconque des revendications 1 et 2, dans lequel l'épaulement semblable à une lame allongée (256) s'étend vers l'extérieur sur une étendue similaire à une surface extérieure de la queue (224).
